(19) Europäisches Patentamt
European Patent Office
Office européen des brevets

(11) EP 3 859 058 B1

(12) **EUROPEAN PATENT SPECIFICATION**

(45) Date of publication and mention of the grant of the patent:
**12.11.2025 Bulletin 2025/46**

(21) Application number: **19867250.3**

(22) Date of filing: **19.09.2019**

(51) International Patent Classification (IPC):
***D01F 6/76*** (2006.01) ***D01F 6/78*** (2006.01)
***D04H 1/542*** (2012.01) ***D04H 1/551*** (2012.01)
***D04H 1/558*** (2012.01) ***D04H 1/732*** (2012.01)
***D21H 13/20*** (2006.01)

(52) Cooperative Patent Classification (CPC):
**D01F 6/765; D01F 6/78; D04H 1/542; D04H 1/551; D04H 1/558; D04H 1/732; D21H 13/20**

(86) International application number:
**PCT/JP2019/036674**

(87) International publication number:
**WO 2020/066815 (02.04.2020 Gazette 2020/14)**

(54) **COPOLYMERIZED POLYPHENYLENE SULFIDE FIBERS**
COPOLYMERISIERTE POLYPHENYLENSULFIDFASERN
FIBRE DE SULFURE DE POLYPHÉNYLÈNE COPOLYMÉRISÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.09.2018 JP 2018182527**

(43) Date of publication of application:
**04.08.2021 Bulletin 2021/31**

(73) Proprietor: **Toray Industries, Inc.**
**Tokyo 103-8666 (JP)**

(72) Inventors:
- **TSUCHIYA, Shohei**
**Mishima-shi, Shizuoka 411-8652 (JP)**
- **KATSUTA, Hiroo**
**Otsu-shi, Shiga 520-8558 (JP)**
- **FUNATSU, Yoshitsugu**
**Shizuoka 411-8652 (JP)**

(74) Representative: **Mewburn Ellis LLP**
**Aurora Building**
**Counterslip**
**Bristol BS1 6BX (GB)**

(56) References cited:
**EP-A1- 2 065 500**
**EP-A1- 2 511 409**
**JP-A- 2009 068 149**
**JP-A- H01 126 334**
**JP-A- H02 269 126**
**JP-A- H07 196 799**
**JP-A- S5 083 500**
**JP-A- S6 114 228**
**JP-A- S61 152 828**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 859 058 B1

## Description

TECHNICAL FIELD

The present invention relates to a copolymerized polyphenylene sulfide fiber that is thin, has a low heat shrinkage rate, and is suitable for a use as a binder having excellent weldability.

BACKGROUND ART

A polyphenylene sulfide that has high heat resistance, chemical resistance, electric insulating properties, and flame retardancy is used for various uses, in which these characteristics are made use of, such as a bug filter, a paper-making canvas, electric insulating paper, and a battery separator.

In the electric insulating paper or battery separator use among these example uses, a wet nonwoven fabric enabling densification and thinning is used. In recent years, the electric insulating paper or the battery separator usable in a high-temperature environment is increasingly demanded, and a polyphenylene sulfide wet nonwoven fabric having excellent heat resistance and chemical resistance is drawing attention.

There has been, however, a problem that a drawnpolyphenylene sulfide fiber singly has difficulty being softened and has poor adhesiveness (weldability) between fibers when formed into a wet nonwoven fabric, and therefore decreases the mechanical characteristics of the wet nonwoven fabric sheet. Thus, in order to solve the problem, various proposals are made.

For example, a polyphenylene sulfide wet nonwoven fabric is proposed that is formed of a drawn polyphenylene sulfide fiber and an undrawn polyphenylene sulfide fiber as a binder fiber for thermocompression bonding (see Patent Document 1). This proposal can give a polyphenylene sulfide wet nonwoven fabric having low basis-weight unevenness even with a low basis weight and having high mechanical characteristics.

A low-shrinkage binder fiber is also proposed that is formed by heat-treating an undrawn polyphenylene sulfide fiber in advance at a temperature lower than the crystallization temperature of the fiber and is thus prevented from being heat-shrunk in a paper-making drying step (see Patent Document 2). This proposal not only suppresses a crease or a bulge in the paper-making drying step, but can also give a polyphenylene sulfide wet nonwoven fabric having excellent thermal dimensional stability.

A thin binder fiber is also proposed that is formed by drawing an undrawned polyphenylene sulfide fiber in an ethylene glycol bath at 110°C and has excellent adhesiveness (see Patent Document 3). This binder fiber and a specific polyphenylene sulfide fiber can give a polyphenylene sulfide wet nonwoven fabric having excellent mechanical characteristics and thickness uniformity.

Patent Document 4 discloses a particular method for producing a long fiber nonwoven fabric. Patent Document 5 discloses a particular heat-resistant nonwoven fabric. Patent Document 6 discloses a particular polyphenylene sulfide monofilament, and a particular method of manufacture.

PRIOR ART DOCUMENTS

PATENT DOCUMENTS

Patent Document 1: JP 7-189169; Patent Document 2: JP 2010-77544; Patent Document 3: JP 2007-39840; Patent Document 4: EP 2511409 A1; Patent Document 5: EP 2065500 A1; Patent Document 7: JP 2009-068149A

SUMMARY OF THE INVENTION

PROBLEMS TO BE SOLVED BY THE INVENTION

In Patent Document 1, however, there is a problem that the undrawn polyphenylene sulfide fiber used as a binder fiber has a very high shrinkage rate to generate a dry crease or bulge derived from heat shrinkage of the fiber in the paper-making drying step. Further, there is also a problem that the undrawn polyphenylene sulfide fiber has a large fiber diameter and therefore not only makes it difficult to thin the wet nonwoven fabric sheet, but also lowers the dispersibility of cut fibers in paper making, to give insufficient thickness uniformity and an insufficient CV value of the basis weight.

In Patent Document 2, there is a problem that while the heat shrinkage of the undrawn polyphenylene sulfide fiber in the paper-making drying step becomes low by heat-treating the fiber, the heat treatment progresses the crystallization of the fiber to lower the adhesiveness as the binder fiber. In addition, the fiber is undrawn and is thus thick to lower the dispersibility of cut fibers in paper making and thus make the wet nonwoven fabric sheet have poor thickness uniformity and a poor CV value of the basis weight.

In Patent Document 3, while a fiber that is loworientation and has a small fiber diameter can be obtained by drawing an undrawn polyphenylene sulfide fiber in an ethylene glycol bath at 110°C, the fiber obtained by the method is drawnwithout orientation crystallization to have a large heat shrinkage rate and poor thermal dimensional stability and be thus shrunk in the paper-making drying step and generate a dry crease or bulge.
Thus, a polyphenylene sulfide that attains both thinness and a low heat shrinkage rate, and is suitable for a use as a binder having excellent adhesiveness has not been reported so far.

SOLUTIONS TO THE PROBLEMS

The inventors of the present application have conducted a serious study and resulted in finding that a copolymerized polyphenylene sulfide fiber that is thin and has a low shrinkage rate while maintaining weldability as a binder fiber can be obtained by spinning a copolymerized polyphenylene sulfide resin having low crystallinity and then drawing and heat-setting the resultant fiber in a specific temperature range.
That is, the present invention is to solve the above problems, and the copolymerized polyphenylene sulfide fiber according to the present invention, defined in claim 1, is characterized by containing a copolymerized polyphenylene sulfide that has a p-phenylene sulfide unit as a main component and contains 3 mol% or more and 40 mol% or less of a m-phenylene sulfide unit in a repeating unit, and having a degree of crystallization of 10.0% or more and 30.0% or less, an average fiber diameter of 5 μm or more and 25 μm or less, and further a shrinkage rate in 98°C hot water of 25.0% or less.
In a preferred aspect of the copolymerized polyphenylene sulfide fiber according to the present invention, the birefringence is 0.18 or more and 0.40 or less.
In a preferred aspect of the copolymerized polyphenylene sulfide fiber according to the present invention, the melting point is 200°C or higher and 260°C or lower.
In a preferred aspect of the copolymerized polyphenylene sulfide fiber according to the present invention, the CV value of the fiber diameter is 10.0% or less.
In a preferred aspect of the copolymerized polyphenylene sulfide fiber according to the present invention, the strength is 2.0 cN/dtex or more and the elongation is 50% or less.

EFFECTS OF THE INVENTION

The present invention can provide a copolymerized polyphenylene sulfide fiber that is thin, has a low heat shrinkage rate, and is suitable for a use as a binder having excellent weldability.

EMBODIMENTS OF THE INVENTION

The copolymerized polyphenylene sulfide fiber according to the present invention is characterized by containing a copolymerized polyphenylene sulfide that has a p-phenylene sulfide unit as a main component and contains 3 mol% or more and 40 mol% or less of a m-phenylene sulfide unit in a repeating unit, and having a degree of crystallization of 10.0% or more and 30.0% or less, an average fiber diameter of 5 μm or more and 25 μm or less, and further a shrinkage rate in 98°C hot water of 25.0% or less. Hereinafter, the copolymerized polyphenylene sulfide fiber according to the present invention is described in detail.

[Copolymerized polyphenylene sulfide]

It is important for the copolymerized polyphenylene sulfide used in the present invention to have, as a main repeating unit, a p-phenylene sulfide unit represented by a structural formula (1) and have, as a copolymerization component, a m-phenylene sulfide unit represented by a structural formula (2). The copolymerized polyphenylene sulfide having the m-phenylene sulfide as a copolymerization component lowers the crystallinity while maintaining the chemical resistance of the polyphenylene sulfide, to be formed into a copolymerized polyphenylene sulfide fiber attaining both excellent chemical resistance and weldability.

[Chemical formula 1]

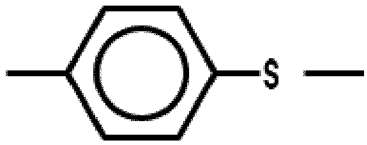 (1) 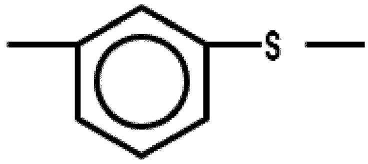 (2)

It is important for the copolymerized polyphenylene sulfide used in the present invention to have a p-phenylene sulfide unit as a main repeating unit. Here, the main repeating unit indicates a repeating unit contained most in the copolymerized polyphenylene sulfide. Accordingly, when the copolymerized polyphenylene sulfide used in the present invention consists of two components, the p-phenylene sulfide unit and the m-phenylene sulfide unit, the p-phenylene sulfide unit accounts for 60 mol% or more and 97 mol% or less of a repeating unit. By setting the p-phenylene sulfide unit at 60 mol% or more, preferably 70 mol% or more in the repeating unit, the copolymerized polyphenylene sulfide fiber has good spinnability and excellent heat resistance and mechanical characteristics. Further, by setting the p-phenylene sulfide unit at 97 mol% or less, preferably 95 mol% or less, the copolymerized polyphenylene sulfide lowers the crystallinity to be formed into a copolymerized polyphenylene sulfide fiber having excellent weldability. Even when consisting of three or more components including a component other than the p-phenylene sulfide unit and the m-phenylene sulfide unit, the copolymerized polyphenylene sulfide having the p-phenylene sulfide unit as a main repeating unit is formed into a copolymerized polyphenylene sulfide fiber having good heat resistance and mechanical characteristics.

It is important for the copolymerized polyphenylene sulfide used in the present invention to have 3 mol% or more and 40 mol% or less of the m-phenylene sulfide unit in the repeating unit. By setting the m-phenylene sulfide unit at 3 mol% or more, preferably 5 mol% or more, the copolymerized polyphenylene sulfide lowers the crystallinity to be formed into a copolymerized polyphenylene sulfide fiber having excellent weldability. Further, by setting the m-phenylene sulfide unit at 40 mol% or less, preferably 30 mol% or less, the copolymerized polyphenylene sulfide fiber has good mechanical characteristics.

The mole fractions of the p-phenylene sulfide unit and the m-phenylene sulfide unit in the copolymerized polyphenylene sulfide used in the present invention can be measured by infrared spectroscopic analysis.

Examples of the type of copolymerization of the copolymerized polyphenylene sulfide used in the present invention include random copolymerization and block copolymerization, and random copolymerization is preferably used in terms of easily controlling the melting point.

The copolymerized polyphenylene sulfide used in the present invention can contain another copolymerization component in a range that does not impair the effects of the present invention. Examples of the other copolymerization component include aromatic sulfides such as a triphenylene sulfide and a biphenylene sulfide, and alkyl substitutions and halogen substitutions thereof. The mass ratio of the other copolymerization component is preferably 5 mass% or less, more preferably 3 mass% or less, further preferably 1 mass% or less to allow the characteristics of the copolymerized polyphenylene sulfide of the present invention to be sufficiently exerted. When the other copolymerization component is contained, the remainder other than the other copolymerization component and the m-phenylene sulfide unit preferably equals the content of the p-phenylene sulfide unit.

In the copolymerized polyphenylene sulfide used in the present invention, a thermoplastic resin can be blended in a range that does not impair the effects of the present invention. Examples of the thermoplastic resin include various thermoplastic resins such as a poly(p-phenylene sulfide) having only the p-phenylene sulfide unit as the repeating unit, polyether imide, polyether sulfone, polysulfone, polyphenylene ether, polyester, polyarylate, polyamide, polyamide imide, polycarbonate, polyolefin, and polyether ether ketone. The mass ratio of the thermoplastic resin that can be blended is, on the basis of the composition obtained by the blending, preferably 5 mass% or less, more preferably 3 mass% or less, further preferably 1 mass% or less to allow the characteristics of the copolymerized polyphenylene sulfide used in the present invention to be sufficiently exerted. The blending referred to herein is melt mixing/kneading of two or more resin components, and is different from a composite technique for disposing two or more resin components at any positions selected on the fiber cross-section during spinning.

To the copolymerized polyphenylene sulfide used in the present invention, various metal oxides, inorganic substances such as kaolin and silica, and various additives such as a pigment for coloring, a delusterant, a flame retardant, an antioxidant, an ultraviolet absorber, an infrared absorber, a crystal nucleating agent, a fluorescent whitening agent, an end-capping agent, and a compatibilizing agent can be added.

The copolymerized polyphenylene sulfide used in the present invention preferably has a melt mass-flow rate of 50 g/10 min or more and 300 g/10 min or less. By setting the melt mass-flow rate at preferably 50 g/10 min or more, more preferably 80 g/10 min or more, further preferably 100 g/10 min or more, the copolymerized polyphenylene sulfide

increases the flowability during melting to be improved in spinnability and thus formed into a copolymerized polyphenylene sulfide fiber having excellent fiber-diameter uniformity. Further, by setting the melt mass-flow rate at preferably 300 g/10 min or less, more preferably 250 g/10 min or less, further preferably 230 g/10 min or less, the copolymerized polyphenylene sulfide fiber has good mechanical characteristics.

The melt mass-flow rate of the copolymerized polyphenylene sulfide in the present invention indicates a value measured by JIS K7210-1: 2014, chapter 8, method A: mass measuring method, under the conditions of a load of 5.0 kg and a temperature of 315°C.

[Copolymerized polyphenylene sulfide fiber]

It is important for the copolymerized polyphenylene sulfide fiber according to the present invention to contain the copolymerized polyphenylene sulfide. The inventors of the present application have found that a copolymerized polyphenylene sulfide fiber that is thin and has a low heat shrinkage rate and excellent weldability is formed by heat-setting, in a specific temperature range, a fiber obtained through spinning and drawing of the copolymerized polyphenylene sulfide.

It is important for the copolymerized polyphenylene sulfide fiber according to the present invention to have a degree of crystallization of 10.0% or more and 30.0% or less. By setting the degree of crystallization at 30.0% or less, preferably 28.0% or less, the copolymerized polyphenylene sulfide fiber exerts excellent weldability to give good adhesiveness in use as a paper-making binder. By setting the degree of crystallization at 10.0% or more, preferably 15.0% or more, the copolymerized polyphenylene sulfide fiber has excellent thermal dimensional stability and mechanical characteristics.

The degree of crystallization (%) of the copolymerized polyphenylene sulfide fiber according to the present invention indicates an arithmetic average value obtained by calculating a heat of crystal melting $\Delta Hm$ from the area of a melting peak in a DSC curve obtained under the same conditions as in the melting-point measurement described above, next calculating, when an exothermic peak is observed, a heat of crystallization $\Delta Hc$ from the area of the exothermic peak, obtaining a quotient by dividing the difference between the $\Delta Hm$ and the $\Delta Hc$ by a heat of melting (146.2 J/g) of a perfect crystal poly(p-phenylene sulfide), performing the measurement three times per one level, and averaging the quotients. That is:

$$\text{degree of crystallization (\%)} = \{ (\Delta Hm - \Delta Hc)/146.2\} \times 100.$$

It is important for the copolymerized polyphenylene sulfide fiber according to the present invention to have an average fiber diameter of 5μm or more and 25um or less. By setting the average fiber diameter at 25 μm or less, the copolymerized polyphenylene sulfide fiber is improved in dispersibility in main constituent fibers (for example, drawn poly(p-phenylene sulfide) fibers) to be formed into a wet nonwoven fabric having an excellent CV value of the basis weight and excellent thickness uniformity. By setting the average fiber diameter at 5 μm or more, the copolymerized polyphenylene sulfide fiber is improved in adhesiveness as a binder to be formed into a wet nonwoven fabric having excellent mechanical characteristics.

The average fiber diameter of the copolymerized polyphenylene sulfide fiber according to the present invention indicates an arithmetic average value obtained by arbitrarily extracting 100 fibers from cut fibers of an obtained copolymerized polyphenylene sulfide fiber, measuring the fiber diameter (μm) on a cross-section of each of the extracted fibers using an optical microscope under the conditions of an objective lens magnification of 40 times and an eyepiece lens magnification of 10 times, and averaging the measured values. When the fiber has a modified cross-section, the diameter of a true circle obtained by converting the area of the cross-section has been defined as the average fiber diameter (μm).

It is important for the copolymerized polyphenylene sulfide fiber according to the present invention to have a shrinkage rate in 98°C hot water of 25.0% or less. By setting the shrinkage rate at 25.0% or less, preferably 20.0% or less, more preferably 10.0% or less, the copolymerized polyphenylene sulfide fiber having excellent thermal dimensional stability can be obtained and a dry crease or bulge of the wet nonwoven fabric sheet that is generated by heat shrinkage of the fiber in the paper-making drying step can be suppressed. The lower limit of the shrinkage rate in 98°C hot water is not particularly limited, but an industrially attainable lower limit is about 1%.

The shrinkage rate in hot water (%) indicates an arithmetic average value obtained by arbitrarily extracting one fiber from cut fibers of an obtained fiber, measuring an initial length L1 of the extracted fiber, measuring a posttreatment length L2 of the extracted fiber that has been immersed in 98°C hot water for 20 minutes, then taken out from the hot water, and naturally dried, obtaining a quotient by dividing the difference between the L1 and the L2 by the initial length L1, performing the measurement three times per one level, and averaging the quotients. That is:

shrinkage rate in hot water (%) = (L1 - L2)/L1 × 100.

The copolymerized polyphenylene sulfide fiber according to the present invention preferably has a birefringence of 0.18 or more and 0.40 or less. By setting the birefringence at preferably 0.18 or more, more preferably 0.20 or more, further preferably 0.22 or more, the copolymerized polyphenylene sulfide fiber includes highly oriented molecular chains to have excellent mechanical characteristics. Further, by setting the birefringence at preferably 0.40 or less, more preferably 0.35 or less, further preferably 0.30 or less, the copolymerized polyphenylene sulfide fiber can prevent excessive molecular chain orientation or crystallization to exert high adhesiveness and thus have good adhesiveness as a paper-making binder.

The birefringence of the copolymerized polyphenylene sulfide fiber according to the present invention indicates an arithmetic average value obtained by arbitrarily extracting 10 fibers from obtained copolymerized polyphenylene sulfide fibers, measuring the retardation and the optical path length of each single fiber using an optical microscope to calculate the birefringence, and averaging the calculated values.

The copolymerized polyphenylene sulfide fiber according to the present invention preferably has a melting point of 200°C or higher and 260°C or lower. By setting the melting point at preferably 260°C or lower, more preferably 255°C or lower, the copolymerized polyphenylene sulfide fiber exerts excellent weldability to have good adhesiveness as a paper-making binder. By setting the melting point at preferably 200°C or higher, more preferably 230°C or higher, the copolymerized polyphenylene sulfide fiber has excellent heat resistance.

The melting point (°C) of the copolymerized polyphenylene sulfide fiber according to the present invention indicates an arithmetic average value obtained by raising the temperature of an obtained fiber with a DSC from 30°C to 320°C at 16°C/min, obtaining an endothermic peak (melting peak) temperature observed at a temperature of 200°C or higher in the obtained DSC curve, performing the measurement three times per one level, and averaging the measured values.

The copolymerized polyphenylene sulfide fiber according to the present invention preferably has a CV value of the fiber diameter of 10.0% or less. By setting the CV value of the fiber diameter at 10.0% or less, more preferably 8.0% or less, the fiber improves the dispersibility in paper making to give a wet nonwoven fabric sheet that is improved in the CV value of the basis weight and thickness uniformity. The lower limit of the CV value of the fiber diameter is not particularly limited, but an industrially attainable lower limit is about 0.5%.

The CV value of the fiber diameter (%) of the copolymerized polyphenylene sulfide fiber according to the present invention indicates a value obtained by arbitrarily extracting 100 fibers from cut fibers of an obtained copolymerized polyphenylene sulfide fiber, measuring the fiber diameter on a side surface of each of the extracted fibers using an optical microscope, calculating a standard deviation with the measured fiber diameters set as a population and calculating an arithmetic average value of the measured fiber diameters, and representing in percent figures the quotient obtained by dividing the standard deviation by the arithmetic average value. That is:

CV value of fiber diameter (%) = (standard deviation of fiber diameter)/(arithmetic average value of fiber diameter) × 100.

The copolymerized polyphenylene sulfide fiber according to the present invention preferably has a strength of 2.0 cN/dtex or more. By setting the strength at preferably 2.0 cN/dtex or more, more preferably 3.0 cN/dtex or more, the obtained wet nonwoven fabric is improved in mechanical characteristics. The upper limit of the strength is not particularly limited, but an industrially attainable upper limit is about 7.0 cN/dtex.

The copolymerized polyphenylene sulfide fiber according to the present invention preferably has an elongation of 50% or less. By setting the elongation at preferably 50% or less, more preferably 40% or less, the fiber has sufficiently high molecular orientation to cause no plastic deformation (Drawing) in a paper-producing step and be thus formed into a wet nonwoven fabric that is homogeneous and high-quality. By setting the elongation at preferably 10% or more, the copolymerized polyphenylene sulfide fiber decreases the fiber orientation to have sufficient adhesiveness and be thus formed into a wet nonwoven fabric having excellent mechanical characteristics.

The strength and the elongation of the copolymerized polyphenylene sulfide fiber are obtained by performing measurement five times per one level, on the basis of JIS L1013: 2010, 8.5 tensile strength and degree of elongation, under the conditions of a sample length of 200 mm and a tensile speed of 200 mm/min, and obtaining an arithmetic average value of the measured values.

The copolymerized polyphenylene sulfide fiber according to the present invention has good heat resistance, chemical resistance, mechanical characteristics, and flame retardancy, is also thin, and has good thermal dimensional stability and excellent weldability. Therefore, by making use of these features, the copolymerized polyphenylene sulfide fiber can be suitably used as a binder fiber constituting a polyphenylene sulfide wet nonwoven fabric. The wet nonwoven fabric containing the copolymerized polyphenylene sulfide fiber according to the present invention as a binder fiber has

less dry unevenness or creases, has excellent thickness uniformity, and can further be thinned to be suitably used for uses such as a battery separator.

The cross-sectional shape of the copolymerized polyphenylene sulfide fiber according to the present invention is never limited, and can be formed in any shape such as a round cross-section, a multilobar cross-section (e.g., a triangular cross-section), a flattened cross-section, an S-shaped cross-section, a cross-shaped cross-section, or a hollow cross-section. The cross-sectional shape, however, is preferably a round cross-section from the viewpoint of fiber dispersibility in paper making.

[Method for manufacturing copolymerized polyphenylene sulfide fiber]

Next, a method for manufacturing the copolymerized polyphenylene sulfide fiber according to the present invention is specifically described.

Examples of the method for manufacturing the copolymerized polyphenylene sulfide used in the present invention include a method for reacting an alkali metal sulfide such as sodium sulfide with p-dichlorobenzene and m-dichlorobenzene in an organic amide solvent such as N-methyl-2-pyrrolidone to give a copolymerized polyphenylene sulfide.

For the purpose of preventing incorporation of moisture or removal of an oligomer, the copolymerized polyphenylene sulfide used in the present invention is preferably dried before subjected to melt spinning, to increase yarn-making capabilities. The drying conditions generally used are vacuum drying at 100 to 200°C for 1 to 24 hours.

In the melt spinning, a melt-spinning technique using extruder, for example, a pressure melter-type extruder or a single screw or twin screw extruder can be employed. The extruded copolymerized polyphenylene sulfide goes through a pipe, is weighed by weighing equipment such as a gear pump, passes through a filter for removing foreign matter, and then is guided to a spinneret. At this time, the temperature (spinning temperature) from the polymer pipe to the spinneret is preferably 280°C or higher in order to increase the flowability of the copolymerized polyphenylene sulfide, and is preferably set at 380°C or lower in order to suppress pyrolysis of the polymer.

In a preferred aspect, the spinneret used for discharge has a spinneret hole preferably having a hole diameter D of 0.1 mm or more and 0.6 mm or less, and a ratio L/D that is defined by a quotient obtained by dividing a land length L (the length of a straight pipe identical with the hole diameter of the spinneret hole) of the spinneret hole by the hole diameter is 1 or more and 10 or less.

A copolymerized polyphenylene sulfide fiber discharged from the spinneret hole is subjected to a cooling blast (air), and thus cooled and solidified. The temperature of the cooling blast can be determined according to the balance with the speed of the cooling blast, from the viewpoint of cooling efficiency. In a preferred aspect, however, the temperature is 30°C or lower. By setting the temperature of the cooling blast at preferably 30°C or lower, the copolymerized polyphenylene sulfide fiber has a stable solidification behavior by cooling and has high fiber-diameter uniformity.

The cooling blast is preferably flown perpendicular to the undrawn fiber discharged from the spinneret. In the blast cooling, the speed of the cooling blast is preferably 10 m/min or more from the viewpoint of cooling efficiency and fineness uniformity, and is preferably 100 m/min or less from the viewpoint of yarn-making stability.

The cooled and solidified undrawn fiber is taken up by a roller (godet roller) rotating at a constant speed. The take-up speed is preferably 300 m/min or more in order to improve linear uniformity and productivity, and is preferably 2000 m/min or less in order not to generate yarn breakage.

The undrawn fiber thus obtained is once wound up, or taken up and then continuously subjected to a drawing step. Drawing is performed by a heated first roller, or a heating device disposed between the first roller and a second roller, for example, by allowing the undrawn fiber to run in a heating bath or on a hot plate. The drawing conditions are determined according to the mechanical properties of the obtained undrawn fiber, the drawing temperature is determined by the temperature of the heated first roller or the heating device disposed between the first roller and the second roller, and the drawing ratio is determined by the ratio between the peripheral speeds of the first roller and the second roller.

The drawing ratio in the drawing step is preferably 2.5 times or more and 7.0 times or less. By setting the drawing ratio at preferably 2.5 times or more, more preferably 3.0 times or more, the copolymerized polyphenylene sulfide fiber can reduce the CV value of the fineness, make the molecular chains highly oriented to increase the birefringence, and has excellent mechanical characteristics. Further, by setting the drawing ratio at preferably 7.0 times or less, more preferably 6.5 times or less, the copolymerized polyphenylene sulfide fiber not only can suppress yarn breakage in the drawing step but also suppress an excessive rise of the birefringence to exert high adhesiveness and thus have good adhesiveness as a paper-making binder.

The temperature of the heated first roller or the heating device in the drawing step is preferably set at 80°C or higher and 130°C or lower. By setting the temperature at 80°C or higher, the drawing point is fixed to enable stable drawing, and by setting the temperature at 130°C or lower, the copolymerized polyphenylene sulfide fiber can suppress yarn breakage to more easily pass the process. The temperature of the second roller is preferably set at 20°C or less higher than the temperature of the heated first roller or the heating device, from the viewpoint of fixing the drawing point.

Further, after passing the second roller, the drawnfiber needs to be heated and heat-set by a heated third roller or a heating device disposed between the second roller and a third roller. The inventors of the present application have conducted a study about the heat setting conditions and resulted in confirming that when heat-set at a similar heat setting temperature (for example, 230°C) to the heat setting temperature for conventional poly(p-phenylene sulfide) fibers consisting of only the p-phenylene sulfide unit, the copolymerized polyphenylene sulfide fiber according to the present invention is not only impaired in weldability as a binder fiber due to excessive crystallization, but also has a low strength.

Therefore, the inventors of the present application have conducted a serious study and resulted in finding that by setting the heat setting temperature within a certain range, a copolymerized polyphenylene sulfide fiber can be obtained that has a low heat shrinkage rate and excellent weldability, and further has excellent mechanical characteristics.

The heat setting temperature in the heat setting is preferably 110°C or higher and 210°C or lower. By setting the heat setting temperature at preferably 110°C or higher, more preferably 140°C or higher, further preferably 150°C or higher, the copolymerized polyphenylene sulfide fiber has good heat shrinkage characteristics. Further, by setting the heat setting temperature at preferably 210°C or lower, more preferably 200°C or lower, further preferably 190°C or lower, the copolymerized polyphenylene sulfide fiber suppresses thermal crystallization and becomes suitable for a use as a paper-making binder having excellent adhesiveness.

When the obtained copolymerized polyphenylene sulfide fiber is formed into a wet nonwoven fabric, a paper-making dispersant is preferably imparted.

The impartation of the paper-making dispersant to the obtained copolymerized polyphenylene sulfide fiber is performed usually in the form of a tow and by a kiss roller. The attachment rate of the paper-making dispersant is preferably 0.2 mass% or more and 0.6 mass% or less relative to the weight of the fiber. By setting the attachment rate of the dispersant at preferably 0.2 mass% or more, more preferably 0.3 mass% or more, the fiber improves the dispersibility to be formed into a wet nonwoven fabric having excellent thickness uniformity and an excellent CV value of the basis weight. Further, by setting the attachment rate of the dispersant at preferably 0.6 mass% or less, more preferably 0.5 mass% or less, the fiber more easily passes the process.

After this impartation of the dispersant, the fiber may be crimped by a crimper. By crimping the fiber, fibers cause entanglement to be formed into a wet nonwoven fabric having excellent mechanical characteristics.

The number of crimps is preferably 2 crimps/25 mm or more and 15 crimps/25 mm or less. By setting the number of crimps at 2 crimps/25 mm or more, fibers are entangled to be formed into a wet nonwoven fabric having excellent mechanical characteristics. Further, by setting the number of crimps at 15 crimps/25 mm or less, the fiber improves the dispersibility in paper making to be formed into a wet nonwoven fabric having good thickness uniformity and an excellent CV value of the basis weight.

The copolymerized polyphenylene sulfide fiber obtained as described above can be dried by a setter and then cut by a cutter to give cut fibers. The cutting length of the cut fibers is preferably 1 mm or more and 20 mm or less. By setting the cutting length at preferably 1 mm or more, more preferably 3 mm or more, fibers are entangled to be formed into a wet nonwoven fabric having excellent mechanical characteristics. Further, by setting the cutting length at preferably 20 mm or less, more preferably 10 mm or less, the fiber improves the dispersibility in paper making to be formed into a wet nonwoven fabric having good thickness uniformity and a good CV value of the basis weight.

[Wet nonwoven fabric]

A paper-making solution can be prepared by dispersing, in water, the cut fibers obtained as described above, as binder fibers, together with a main constituent fiber. Usually used as the main constituent fiber is a poly(p-phenylene sulfide) fiber consisting of only the p-phenylene sulfide unit.

The ratio of the copolymerized polyphenylene sulfide fiber according to the present invention to the main constituent fiber in the paper-making solution is preferably set at 5 mass% or more and 60 mass% or less. By setting the ratio of the copolymerized polyphenylene sulfide fiber at 5 mass% or more, more preferably 10 mass% or more, fibers have many adhesion points to be formed into a wet nonwoven fabric having excellent mechanical characteristics. Further, by setting the ratio of the copolymerized polyphenylene sulfide fiber at 60 mass% or less, more preferably 50 mass%, the wet nonwoven fabric has excellent thermal dimensional stability.

When not imparted in the form of a tow, the paper-making dispersant may be imparted to the cut fibers at this stage to disperse the fibers in the paper-making dispersion.

A supply of the paper-making solution to a simple paper-making machine enables acquisition of a wet nonwoven fabric. Adjustment of the fiber concentration in the supplied paper-making solution enables a change in basis weight and thickness of the obtained wet nonwoven fabric.

The wet nonwoven fabric obtained as described above is preferably dried for removal of moisture. The drying temperature is preferably 90°C or higher and 150°C or lower not to cause a decrease in weldability due to crystallization of an amorphous portion.

The wet nonwoven fabric is subjected to thermocompression bonding by a flatbed heat press machine or a

calender roll to cause welding of the copolymerized polyphenylene sulfide fiber according to the present invention and thus become a wet nonwoven fabric having excellent mechanical characteristics. The thermocompression bonding temperature is preferably set at 170°C or higher and 250°C or lower, and the compression bonding time is preferably 1 minute or more and within 10 minutes. By setting the thermocompression bonding temperature at preferably 170°C or higher, due to the welding of the copolymerized polyphenylene sulfide fiber according to the present invention, the wet nonwoven fabric has excellent mechanical characteristics. By setting the thermocompression bonding temperature at 250°C or lower, the wet nonwoven fabric can be prevented from being heat-shrunk during the thermocompression bonding. Further, by setting the compression bonding time at 1 minute or more, the whole wet nonwoven fabric can be uniformly heated to be a homogeneous wet nonwoven fabric. By setting the compression bonding time at within 10 minutes, the wet nonwoven fabric can be prevented from decreasing the mechanical characteristics due to excessive crystallization.

EXAMPLES

Hereinafter, the copolymerized polyphenylene sulfide fiber according to the present invention is more specifically described by way of examples. The values of the characteristics in the examples were obtained by the following methods.

A. Melt mass-flow rate:

The melt mass-flow rate of the copolymerized polyphenylene sulfide was measured using MELT INDEXER (F-F01 manufactured by Toyo Seiki Seisaku-sho, Ltd.) according to the above-described method (JIS K7210-1: 2014, chapter 8, method A: mass measuring method, load of 5.0 kg and temperature of 315°C) .

B. Average fiber diameter:

100 fibers extracted arbitrarily from cut fibers of the obtained copolymerized polyphenylene sulfide fiber were each measured for the fiber diameter (μm) on a cross-section of the fiber using an optical microscope (BH2 manufactured by Olympus Corporation) under the conditions of an objective lens magnification of 40 times and an eyepiece lens magnification of 10 times, and an arithmetic average value of the measured values was obtained and defined as an average fiber diameter (μm). When the fiber had a modified cross-section, the diameter of a true circle obtained by converting the area of the cross-section was defined as the average fiber diameter (μm).

C. Strength and elongation:

The strength and the elongation of the copolymerized polyphenylene sulfide fiber were measured according to the above-described method (JIS L1013: 2010, 8.5 tensile strength and degree of elongation, sample length of 200 mm, tensile speed of 200 mm/min, arithmetic average value in five measurements per one level) using TENSILON (UTM-III-100 manufactured by ORIENTEC CO., LTD.).

D. Melting point:

The melting point of the copolymerized polyphenylene sulfide fiber was obtained by raising the temperature of the obtained fiber with a DSC (Q1000 manufactured by TA instruments) from 30°C to 320°C at 16°C/min, measuring the temperature at the top of a melting peak (endothermic peak) observed at a temperature of 200°C or higher in the obtained DSC curve, performing the measurement three times per one level, and obtaining an arithmetic average value of the measured values.

E. Degree of crystallization:

- degree of crystallization (%) = $\{ (\Delta Hm - \Delta Hc)/146.2\} \times 100$

The degree of crystallization (%) of the copolymerized polyphenylene sulfide fiber was obtained by calculating a heat of crystal melting ΔHm from the area of a melting peak in a DSC curve obtained under the same conditions as in the above-described melting-point measurement, next calculating, when an exothermic peak is observed, a heat of crystallization ΔHc from the area of the exothermic peak, obtaining a quotient by dividing the difference between the ΔHm and the ΔHc by a heat of melting (146.2 J/g) of a perfect crystal poly(p-phenylene sulfide), performing the measurement three times

per one level, and obtaining an arithmetic average value of the quotients.

F. Shrinkage rate in hot water (98°C):

• shrinkage rate in hot water = (L1 - L2)/L1 × 100

One fiber from cut fibers of the obtained fiber was arbitrarily extracted, measured for an initial length L1, and measured for a posttreatment length L2 after immersed in 98°C hot water for 20 minutes, then taken out from the hot water, and naturally dried, a quotient was obtained by dividing the difference between the L1 and the L2 by the initial length L1, the measurement was performed three times per one level, and an arithmetic average value of the quotients was obtained.

G. Birefringence:

The birefringence of the copolymerized polyphenylene sulfide fiber was obtained by observing, with respect to each of 10 fibers arbitrarily extracted from cut fibers, a side surface of the single fiber using an optical microscope (BX53M manufactured by Olympus Corporation) to measure the retardation and the optical path length and calculate the birefringence, then obtaining an arithmetic average value of the calculated values, and defining the arithmetic average value as the birefringence.

H. Fiber weldability test:

A hank with 20 winds was made for each of the copolymerized polyphenylene sulfide fiber obtained by the method described in each of the examples and comparative examples and a poly(p-phenylene sulfide) fiber that was obtained by the same method as in Example 1 except that the heat setting temperature was set at 230°C and consisted of only the p-phenylene sulfide unit, a doubling yarn was produced by combining the two types of fibers, and this doubling yarn was further twisted at 30 T/30 cm using a twist counter (Maeda-type manual twist counter) to produce a twisted yarn. This twisted yarn was subjected to thermocompression bonding for 3 minutes by a flatbed heat press machine set at 230°C, and the fibers were welded to each other. Thereafter, the yarn was subjected to a peeling test using TENSILON (UTM-III-100 manufactured by ORIENTEC CO., LTD.) under the conditions of a sample length of 30 mm and a tensile speed of 50 mm/min, and an average value of maximum six values of the peel stress of the welded fibers was obtained as welding strength.

I. CV value of fiber diameter:

• CV value of fiber diameter (%) = (standard deviation of fiber diameter)/(arithmetic average value of fiber diameter) × 100

100 fibers arbitrarily extracted from cut fibers of the obtained copolymerized polyphenylene sulfide fiber were each measured for the fiber diameter (μm) on a cross-section of the fiber using an optical microscope (BH2 manufactured by Olympus Corporation) under the conditions of an objective lens magnification of 40 times and an eyepiece lens magnification of 10 times, and the CV value of the fiber diameter was obtained by the equation. When the fiber had a modified cross-section, the diameter of a true circle obtained by converting the area of the cross-section was defined as the fiber diameter (μm).

J. Water dispersibility:

The copolymerized polyphenylene sulfide cut fibers (binder fibers) obtained by the method described in each of the examples and comparative examples and poly(p-phenylene sulfide) cut fibers (main constituent fibers) consisting of only the p-phenylene sulfide unit having a fiber diameter of 11 μm and a cut length of 6 mm were mixed in a dispersion at a ratio of 20 : 80 mass% to prepare a solution having a fiber concentration of 0.4 mass%. The solution was stirred with a mixer at 13600 rpm for 10 seconds, then left to stand for 1 minute, and confirmed by the visual inspection. The solution hardly containing a fiber bundle was represented by ◦ and the solution containing a fiber bundle was represented by ×.

K. Evaluation of number of dry creases

The wet nonwoven fabric produced in each of the examples and comparative examples was cut into a size of 100 cm × 100 cm, and then the wet nonwoven fabric undried was put into a hot-air drier and subjected to dry treatment at a temperature of 230°C and a treatment time of 2.5 minutes. Five locations of an area of 10 cm × 10 cm were arbitrarily extracted per one level in the dry-treated wet nonwoven fabric, the number of dry creases was counted using an optical microscope (BH-2 manufactured by Olympus Corporation) under the conditions of an objective lens magnification of 40 times and an eyepiece lens magnification of 10 times, and an arithmetic average value of the five locations was defined as the number of dry creases (creases/100 $cm^2$).

L. Tensile strength of wet nonwoven fabric:

The wet nonwoven fabric produced in each of the examples and comparative examples was measured for a value of the maximum point load using TENSILON (UTM-III-100 manufactured by ORIENTEC CO., LTD.) at a sample width of 15 mm, an initial length of 20 mm, and a tensile speed of 20 mm/min, and an arithmetic average value of five measurements was defined as tensile strength (N/15 mm).

[Example 1]

A random copolymerized polyphenylene sulfide having a melt mass-flow rate of 175 g/10 min and containing 90 mol% of the p-phenylene sulfide unit and 10 mol% of the m-phenylene sulfide unit was vacuum-dried at 150°C for 12 hours and subjected to melt spinning at a spinning temperature of 330°C. In the melt spinning, the copolymerized polyphenylene sulfide was supplied to a spinning pack while melt-extruded by a twin screw extruder and weighed by a gear pump. Thereafter, the copolymerized polyphenylene sulfide was discharged from a spinneret having 36 holes each with a hole diameter D of 0.23 mm and a land length L of 0.3 mm, under the condition of a singlehole discharge rate of 0.5 g/min. The spinneret that was used had a straight hole as an introduction hole positioned directly above the spinneret holes, and had a tapered connection portion between the introduction hole and the spinneret holes.

The copolymerized polyphenylene sulfide discharged from the spinneret was made to pass a 50-mm warm region and then air-cooled over 1.0 m, using a uniflow cooling device, under the conditions of a temperature of 25°C and a wind speed of 18 m/min. Thereafter, an oil agent was imparted, and all the 36 filaments were wound up by a winder via a first godet roller and a second godet roller at 1000 m/min to give undrawn fibers.

The undrawn fiber was taken up by a feed roller equipped with a nip roller, strained between the feed roller and a first roller, and then made to go around the first roller and a second roller heated respectively at 90°C and 100°C six times for performing heat drawing. Further, the drawn fiber was made to go around a third roller heated at 170°C six times and thus heat-set. The drawingratio was 3.5 times, and the drawn heat-set fiber was, after the third roller, taken up by a non-heated roller at a peripheral speed of 400 m/min and then wound up by a winder to give a copolymerized polyphenylene sulfide fiber.

The obtained copolymerized polyphenylene sulfide fiber was cut by a cutter to give copolymerized polyphenylene sulfide cut fibers having a cut length of 6 mm. The cut fibers and poly(p-phenylene sulfide) cut fibers consisting of only the p-phenylene sulfide unit and having a fiber diameter of 11 μm and a cut length of 6 mm were mixed in a paper-making dispersion at a ratio of 20 : 80 mass% to prepare a paper-making solution having a fiber concentration of 0.4 mass%. This paper-making solution was supplied to a simple paper-making machine to give a wet nonwoven fabric having a basis weight of 50 $g/m^2$. Further, the wet nonwoven fabric was put into a hot-air drier at 120°C, treated for 3 minutes, then air-cooled, and then subjected to thermocompression bonding using a flatbed heat press machine at 230°C, at a pressing pressure of 1.5 MPa for 3 minutes.

Table 1 shows evaluation results of the obtained copolymerized polyphenylene sulfide fiber. Table 1 shows that the obtained copolymerized polyphenylene sulfide fiber had an average fiber diameter of 11 μm, a degree of crystallization of 26.4%, a shrinkage rate in hot water of 3.4%, a strength of 4.0 cN/dtex, an elongation of 28%, a welding strength of 0.021 N, a birefringence of 0.25, and a CV value of the fiber diameter of 5.2%, and had good water dispersibility during the preparation of the paper-making solution. Further, the wet nonwoven fabric obtained as described above had 0.8 dry creases/100 $cm^2$ when dried and a tensile strength of 24 N/15 mm, and thus the wet nonwoven fabric had excellent thermal dimensional stability and mechanical characteristics.

[Example 2]

A copolymerized polyphenylene sulfide fiber and a wet nonwoven fabric were obtained by the same method as in Example 1 except that a random copolymerized polyphenylene sulfide containing 75 mol% of the p-phenylene sulfide unit and 25 mol% of the m-phenylene sulfide unit was used.

Table 1 shows evaluation results of the obtained copolymerized polyphenylene sulfide fiber. Table 1 shows that the obtained copolymerized polyphenylene sulfide fiber had an average fiber diameter of 11 μm, a degree of crystallization of 25.8%, a shrinkage rate in hot water of 4.0%, a strength of 3.5 cN/dtex, an elongation of 26%, a welding strength of 0.044 N, a birefringence of 0.24, and a CV value of the fiber diameter of 5.5%, and had good water dispersibility during the preparation of the paper-making solution. Further, the wet nonwoven fabric obtained as described above had 0.9 dry creases/100 $cm^2$ when dried and a tensile strength of 28 N/15 mm, and thus the wet nonwoven fabric had excellent thermal dimensional stability and mechanical characteristics.

[Example 3]

A copolymerized polyphenylene sulfide fiber and a wet nonwoven fabric were obtained by the same method as in Example 1 except that a random copolymerized polyphenylene sulfide containing 65 mol% of the p-phenylene sulfide unit and 35 mol% of the m-phenylene sulfide unit was used.

Table 1 shows evaluation results of the obtained copolymerized polyphenylene sulfide fiber. Table 1 shows that the obtained copolymerized polyphenylene sulfide fiber had an average fiber diameter of 11 μm, a degree of crystallization of 25.2%, a shrinkage rate in hot water of 4.4%, a strength of 3.0 cN/dtex, an elongation of 22%, a welding strength of 0.055 N, a birefringence of 0.24, and a CV value of the fiber diameter of 6.0%, and had good water dispersibility during the preparation of the paper-making solution. Further, the wet nonwoven fabric obtained as described above had 1.5 dry creases/100 $cm^2$ when dried and a tensile strength of 32 N/15 mm, and thus the wet nonwoven fabric had excellent thermal dimensional stability and mechanical characteristics.

[Example 4]

A copolymerized polyphenylene sulfide fiber and a wet nonwoven fabric were obtained by the same method as in Example 1 except that a random copolymerized polyphenylene sulfide containing 95 mol% of the p-phenylene sulfide unit and 5 mol% of the m-phenylene sulfide unit was used.

Table 1 shows evaluation results of the obtained copolymerized polyphenylene sulfide fiber. Table 1 shows that the obtained copolymerized polyphenylene sulfide fiber had an average fiber diameter of 11 μm, a degree of crystallization of 28.5%, a shrinkage rate in hot water of 3.0%, a strength of 4.3 cN/dtex, an elongation of 29%, a welding strength of 0.011 N, a birefringence of 0.25, and a CV value of the fiber diameter of 5.0%, and had good water dispersibility during the preparation of the paper-making solution. Further, the wet nonwoven fabric obtained as described above had 0.7 dry creases/100 $cm^2$ when dried and a tensile strength of 20 N/15 mm, and thus the wet nonwoven fabric had excellent thermal dimensional stability and mechanical characteristics.

[Comparative Example 1]

A poly(p-phenylene sulfide) fiber and a wet nonwoven fabric were obtained by the same method as in Example 1 except that a poly(p-phenylene sulfide) consisting of only the p-phenylene sulfide unit was used.

Table 1 shows evaluation results of the obtained poly(p-phenylene sulfide) fiber. Table 1 shows that the obtained poly(p-phenylene sulfide) fiber had an average fiber diameter of 11 μm, a degree of crystallization of 35.6%, a shrinkage rate in hot water of 1.6%, a strength of 4.6 cN/dtex, an elongation of 28%, a welding strength of 0.001 N, a birefringence of 0.25, and a CV value of the fiber diameter of 4.8%, and had good water dispersibility during the preparation of the paper-making solution. Further, the wet nonwoven fabric obtained as described above had 0 dry creases/100 $cm^2$ when dried and a tensile strength of 3 N/15 mm, and thus the wet nonwoven fabric had excellent thermal dimensional stability but low mechanical characteristics.

[Table 1]

| Evaluation items | | | Example 1 | Example 2 | Example 3 | Example 4 | Comparative Example 1 |
|---|---|---|---|---|---|---|---|
| Resin | Copolymerization mole ratio (m-component) | mol% | 10 | 25 | 35 | 5 | 0 |
| | Melting point | ° C | 253 | 249 | 247 | 257 | 282 |
| Drawing conditions | Drawing ratio | times | 3.5 | 3.5 | 3.5 | 3.5 | 3.5 |
| | Heat setting temperature | ° C | 17) | 170 | 170 | 170 | 170 |

(continued)

| Evaluation items | | | Example 1 | Example 2 | Example 3 | Example 4 | Comparative Example 1 |
|---|---|---|---|---|---|---|---|
| Evaluation of fiber physical properties | Average fiber diameter | mm | 11 | 11 | 11 | 11 | 11 |
| | Average single-yarn fineness | dtex | 1.3 | 1.3 | 1.3 | 1.3 | 1.3 |
| | Degree of crystallization | % | 26.4 | 25.8 | 25.2 | 28.5 | 35.6 |
| | Shrinkage rate in 98°C hot water | % | 3.4 | 4.0 | 4.4 | 3.0 | 1.6 |
| | Strength | cN/dtex | 4.0 | 3.5 | 3.0 | 4.3 | 4.6 |
| | Elongation | % | 28 | 26 | 22 | 29 | 28 |
| | Welding strength | N | 0.021 | 0.044 | 0.055 | 0.011 | 0.001 |
| | Birefringence | - | 0.25 | 0.24 | 0.24 | 0.25 | 0.25 |
| | CV of fiber diameter | % | 5.2 | 5.5 | 6.0 | 5.0 | 4.8 |
| | Water dispersibility | - | ○ | ○ | ○ | ○ | ○ |
| Evaluation of paper making | Number of dry creases | dry creases/10 0 $cm^2$ | 0.8 | 0.9 | 1.5 | 0.7 | 0 |
| | Tensile strength | N/15mm | 24 | 28 | 32 | 20 | 3 |

[Example 5]

A copolymerized polyphenylene sulfide fiber and a wet nonwoven fabric were obtained by the same method as in Example 1 except that the copolymerized polyphenylene sulfide described in Example 2 was used and the heat setting temperature was set at 25°C.

Table 2 shows evaluation results of the obtained copolymerized polyphenylene sulfide fiber. Table 2 shows that the obtained copolymerized polyphenylene sulfide fiber had an average fiber diameter of 11 μm, a degree of crystallization of 21.7%, a shrinkage rate in hot water of 24.0%, a strength of 3.3 cN/dtex, an elongation of 30%, a welding strength of 0.094 N, a birefringence of 0.21, and a CV value of the fiber diameter of 5.7%, and had good water dispersibility during the preparation of the paper-making solution. Further, the wet nonwoven fabric obtained as described above had 8.1 dry creases/100 $cm^2$ when dried and a tensile strength of 34 N/15 mm, and thus the wet nonwoven fabric had excellent thermal dimensional stability and mechanical characteristics.

[Example 6]

A copolymerized polyphenylene sulfide fiber and a wet nonwoven fabric were obtained by the same method as in Example 1 except that the copolymerized polyphenylene sulfide described in Example 2 was used and the heat setting temperature was set at 110°C.

Table 2 shows evaluation results of the obtained copolymerized polyphenylene sulfide fiber. Table 2 shows that the obtained copolymerized polyphenylene sulfide fiber had an average fiber diameter of 11 μm, a degree of crystallization of 20.1%, a shrinkage rate in hot water of 17.2%, a strength of 3.3 cN/dtex, an elongation of 29%, a welding strength of 0.098 N, a birefringence of 0.23, and a CV value of the fiber diameter of 5.4%, and had good water dispersibility during the preparation of the paper-making solution. Further, the wet nonwoven fabric obtained as described above had 6.7 dry creases/100 $cm^2$ when dried and a tensile strength of 35 N/15 mm, and thus the wet nonwoven fabric had excellent thermal dimensional stability and mechanical characteristics.

[Example 7]

A copolymerized polyphenylene sulfide fiber and a wet nonwoven fabric were obtained by the same method as in Example 1 except that the copolymerized polyphenylene sulfide described in Example 2 was used and the heat setting temperature was set at 130°C.

Table 2 shows evaluation results of the obtained copolymerized polyphenylene sulfide fiber. Table 2 shows that the obtained copolymerized polyphenylene sulfide fiber had an average fiber diameter of 11 μm, a degree of crystallization of 24.0%, a shrinkage rate in hot water of 7.7%, a strength of 3.5 cN/dtex, an elongation of 28%, a welding strength of 0.077 N, a birefringence of 0.24, and a CV value of the fiber diameter of 5.6%, and had good water dispersibility during the preparation of the paper-making solution. Further, the wet nonwoven fabric obtained as described above had 3.5 dry creases/100 $cm^2$ when dried and a tensile strength of 33 N/15 mm, and thus the wet nonwoven fabric had excellent thermal dimensional stability and mechanical characteristics.

[Comparative Example 2]

A copolymerized polyphenylene sulfide fiber was attempted to be obtained by the same method as in Example 1 using the copolymerized polyphenylene sulfide described in Example 2 and setting the heat setting temperature at 230°C, but the yarn was melted and attached to the heating roller during the heat setting, and the copolymerized polyphenylene sulfide fiber could not be obtained.

[Table 2]

| Evaluation items | | | Example 5 | Example 6 | Example 7 | Comparative Example 2 |
|---|---|---|---|---|---|---|
| Resin | Copolymerization mole ratio (m-component) | mol% | 25 | 25 | 25 | 25 |
| | Melting point | °C | 249 | 249 | 249 | 249 |
| Drawing conditions | Drawing ratio | times | 3.5 | 3.5 | 3.5 | 3.5 |
| | Heat setting temperature | °C | 25 | 110 | 130 | 230 |
| Evaluation of fiber physical properties | Average fiber diameter | mm | 11 | 11 | 11 | Sampling unavailable |
| | Average single-yarn fineness | dtex | 1.3 | 1.3 | 1.3 | |
| | Degree of crystallization | % | 21.7 | 20.1 | 24.0 | |
| | Shrinkage rate in 98°C hot water | % | 24.0 | 17.2 | 7.7 | |
| | Strength | cN/dtex | 3.3 | 3.3 | 3.5 | |
| | Elongation | % | 30 | 29 | 28 | |
| | Welding strength | N | 0.094 | 0.098 | 0.077 | |
| | Birefringence | - | 0.21 | 0.23 | 0.24 | |
| | CV of fiber diameter | % | 5.7 | 5.4 | 5.6 | |
| | Water dispersibility | - | ○ | ○ | ○ | |
| Evaluation of paper making | Number of dry creases | dry creases/100 $cm^2$ | 8.1 | 6.7 | 3.5 | |
| | Tensile strength | N/15mm | 34 | 35 | 33 | |

[Comparative Example 3]

A poly(p-phenylene sulfide) fiber was obtained without heat-drawing and heat-setting an udrawn fiber obtained by the same method as in Comparative Example 1. A wet nonwoven fabric was obtained by the same method as in

Comparative Example 1 using this poly(p-phenylene sulfide) fiber.

Table 3 shows evaluation results of the obtained poly(p-phenylene sulfide) fiber. Table 3 shows that the obtained poly(p-phenylene sulfide) fiber had an average fiber diameter of 20 μm, a degree of crystallization of 6.9%, a shrinkage rate in hot water of 35.6%, a strength of 1.2 cN/dtex, an elongation of 344%, a welding strength of 0.181 N, a birefringence of 0.09, and a CV value of the fiber diameter of 10.1%, and had a residual fiber bundle observed and poor water dispersibility. Further, the wet nonwoven fabric obtained as described above had 9.8 dry creases/100 $cm^2$ when dried and a tensile strength of 49 N/15 mm, and thus the wet nonwoven fabric had good mechanical characteristics but low thermal dimensional stability with many dry creases when dried.

[Comparative Example 4]

A poly(p-phenylene sulfide) fiber was obtained by making the undrawnfiber obtained in Comparative Example 3 run on the heating roller at 90°C to perform fixed-length heat treatment. A wet nonwoven fabric was obtained by the same method as in Comparative Example 3 using this poly(p-phenylene sulfide) fiber.

Table 3 shows evaluation results of the obtained poly(p-phenylene sulfide) fiber. Table 3 shows that the obtained poly(p-phenylene sulfide) fiber had an average fiber diameter of 20 um, a degree of crystallization of 18.3%, a shrinkage rate in hot water of 4.8%, a strength of 2.2 cN/dtex, an elongation of 300%, a welding strength of 0.161 N, a birefringence of 0.11, and a CV value of the fiber diameter of 12.0%, and had a residual fiber bundle observed and poor water dispersibility. Further, the wet nonwoven fabric obtained as described above had 2.4 dry creases/100 $cm^2$ when dried and a tensile strength of 40 N/15 mm, and thus the wet nonwoven fabric had excellent thermal dimensional stability and mechanical characteristics.

[Comparative Example 5]

A copolymerized polyphenylene sulfide fiber was obtained without heat-drawing and heat-setting an undrawn fiber obtained by the same method as in Example 1. A wet nonwoven fabric was obtained by the same method as in Example 1 using this copolymerized polyphenylene sulfide fiber.

Table 3 shows evaluation results of the obtained copolymerized polyphenylene sulfide fiber. Table 3 shows that the obtained copolymerized polyphenylene sulfide fiber had an average fiber diameter of 20 μm, a degree of crystallization of 2.3%, a shrinkage rate in hot water of 45.9%, a strength of 1.1 cN/dtex, an elongation of 310%, a welding strength of 0.211 N, a birefringence of 0.09, and a CV value of the fiber diameter of 9.4%, and had a residual fiber bundle observed and poor water dispersibility. Further, the wet nonwoven fabric obtained as described above had 12.5 dry creases/100 $cm^2$ when dried and a tensile strength of 57 N/15 mm, and thus the wet nonwoven fabric had good mechanical characteristics but low thermal dimensional stability with many dry creases when dried.

[Table 3]

| Evaluation items | | | Comparative Example 3 | Comparative Example 4 | Comparative Example 5 |
|---|---|---|---|---|---|
| Resin | Copolymerization mole ratio (m-component) | mol% | 0 | 0 | 25 |
| | Melting point | °C | 282 | 282 | 249 |
| Drawing conditions | Drawing ratio | times | Undrawn | Undrawn | Undrawn |
| | Heat setting temperature | °C | | (Fixed-length heat treatment) | |

(continued)

| Evaluation items | | | Comparative Example 3 | Comparative Example 4 | Comparative Example 5 |
|---|---|---|---|---|---|
| Evaluation of fiber physical properties | Average fiber diameter | mm | 20 | 20 | 20 |
| | Average single-yarn fineness | dtex | 4.2 | 4.2 | 4.2 |
| | Degree of crystallization | % | 6.9 | 18.3 | 2.3 |
| | Shrinkage rate in 98°C hot water | % | 35.6 | 4.8 | 45.9 |
| | Strength | cN/dtex | 1.2 | 2.2 | 1.1 |
| | Elongation | % | 344 | 300 | 310 |
| | Welding strength | N | 0.181 | 0.161 | 0.211 |
| | Birefringence | - | 0.09 | 0.11 | 0.09 |
| | CV of fiber diameter | % | 10.1 | 12.0 | 9.4 |
| | Water dispersibility | - | × | × | × |
| Evaluation of paper making | Number of dry creases | dry creases/100 $cm^2$ | 9.8 | 2.4 | 12.5 |
| | Tensile strength | N/15mm | 49 | 40 | 57 |

The copolymerized polyphenylene sulfide fibers obtained in Examples 1 to 7 were each a fiber that contained a copolymerized polyphenylene sulfide containing a copolymerized m-phenylene sulfide, were thin, and had a low heat shrinkage rate and excellent weldability, and therefore the wet nonwoven fabrics each having less dry creases when dried and excellent thermal dimensional stability and mechanical characteristics could be obtained.

On the other hand, the poly(p-phenylene sulfide) fiber obtained in Comparative Example 1, which was a poly(p-phenylene sulfide) fiber consisting of only the p-phenylene sulfide unit, was thin and had a low heat shrinkage rate but had a high degree of crystallization to have poor weldability, and therefore a wet nonwoven fabric having excellent mechanical characteristics could not be obtained.

The copolymerized polyphenylene sulfide fiber (or the poly(p-phenylene sulfide) fiber) (hereinafter, collectively referred to as the polyphenylene sulfide fiber or the like) obtained in Comparative Example 3 or 5, which was an undrawn polyphenylene sulfide fiber or the like, had excellent mechanical characteristics but had a high shrinkage rate in hot water and thus poor thermal dimensional stability to generate many dry creases in the paper-making step, and therefore a wet nonwoven fabric for practical use could not be obtained.

Further, the poly(p-phenylene sulfide) fiber obtained in Comparative Example 4, which was a fiber obtained by subjecting an undrawn poly(p-phenylene sulfide) fiber consisting of only the p-phenylene sulfide unit to fixed-length heat treatment, had a low heat shrinkage rate but had a high CV value of the fiber diameter to have poor water dispersibility, and a fiber bundle was confirmed to be left in the obtained wet nonwoven fabric by visual inspection.

In Comparative Example 2, the heat setting temperature during the drawing was changed to 230°C, and a fiber that contained a polyphenylene sulfide containing a copolymerized m-phenylene sulfide was attempted to be obtained, but the yarn was melted and attached to the heating roller and the polyphenylene sulfide fiber could not be obtained.

## Claims

1. A copolymerized polyphenylene sulfide fiber comprising a copolymerized polyphenylene sulfide that has a p-phenylene sulfide unit as a main component and contains 3 mol% or more and 40 mol% or less of a m-phenylene sulfide unit in a repeating unit, and having a degree of crystallization of 10.0% or more and 30.0% or less as measured by the method of the description, an average fiber diameter of 5 μm or more and 25 μm or less, and further a shrinkage rate in 98°C hot water of 25.0% or less as measured by the method of the description.

2. The copolymerized polyphenylene sulfide fiber according to claim 1, having a birefringence of 0.18 or more and 0.40 or less as measured by the method of the description.

3. The copolymerized polyphenylene sulfide fiber according to claim 1 or 2, having a melting point of 200°C or higher and 260°C or lower as measured by the method of the description.

4. The copolymerized polyphenylene sulfide fiber according to any of claims 1 to 3, having a CV value of a fiber diameter of 10.0% or less as measured by the method of the description.

5. The copolymerized polyphenylene sulfide fiber according to any of claims 1 to 4, having a strength of 2.0 cN/dtex or more and an elongation of 50% or less as measured by the method of the description.

6. The copolymerized polyphenylene sulfide fiber according to any of claims 1 to 5, wherein the m-phenylene sulfide unit in a repeating unit is contained at 5 mol% or more or at 30 mol% or less.

7. The copolymerized polyphenylene sulfide fiber according to any of claims 1 to 6, wherein the degree of crystallization is 28% or less or is 15% or more.

8. The copolymerized polyphenylene sulfide fiber according to any of claims 1 to 7, wherein the shrinkage rate is 20.0% or less.

## Patentansprüche

1. Copolymerisierte Polyphenylensulfid-Faser, die ein copolymerisiertes Polyphenylensulfid umfasst, das eine p-Phenylensulfid-Einheit als Hauptkomponente aufweist und 3 Mol-% oder mehr und 40 Mol-% oder weniger einer m-Phenylensulfid-Einheit in einer Wiederholeinheit enthält und das einen nach dem Verfahren der Beschreibung gemessenen Kristallisationsgrad von 10,0 % oder mehr und 30,0 % oder weniger, einen mittleren Faserdurchmesser von 5 μm oder mehr und 25 μm oder weniger und weiters eine nach dem Verfahren der Beschreibung gemessene Schrumpfungsrate in 98 °C heißem Wasser von 25,0 % oder weniger aufweist.

2. Copolymerisierte Polyphenylensulfid-Faser nach Anspruch 1, die eine nach dem Verfahren der Beschreibung gemessene Doppelbrechung von 0,18 oder mehr und 0,40 oder weniger aufweist.

3. Copolymerisierte Polyphenylensulfid-Faser nach Anspruch 1 oder 2, die einen nach dem Verfahren der Beschreibung gemessenen Schmelzpunkt von 200 °C oder mehr und 260 °C oder weniger aufweist.

4. Copolymerisierte Polyphenylensulfid-Faser nach einem der Ansprüche 1 bis 3, die einen nach dem Verfahren der Beschreibung gemessenen CV-Wert des Faserdurchmessers von 10,0 % oder weniger aufweist.

5. Copolymerisierte Polyphenylensulfid-Faser nach einem der Ansprüche 1 bis 4, die eine Festigkeit von 2,0 cN/dtex oder mehr und eine Dehnung von 50 % oder weniger, wie durch das Verfahren der Beschreibung gemessen, aufweist.

6. Copolymerisierte Polyphenylensulfid-Faser nach einem der Ansprüche 1 bis 5, wobei 5 Mol-% oder mehr oder in 30 Mol-% oder weniger der m-Phenylensulfid-Einheit in einer Wiederholeinheit enthalten sind.

7. Copolymerisierte Polyphenylensulfid-Faser nach einem der Ansprüche 1 bis 6, wobei der Kristallisationsgrad 28 % oder weniger oder 15 % oder mehr beträgt.

8. Copolymerisierte Polyphenylensulfid-Faser nach einem der Ansprüche 1 bis 7, wobei die Schrumpfungsrate 20,0 % oder weniger beträgt.

## Revendications

1. Fibre de sulfure de polyphénylène copolymérisé comprenant un sulfure de polyphénylène copolymérisé qui présente une unité de sulfure de p-phénylène en tant que composant principal et contient 3 % en mole ou plus et 40 % en mole ou moins d'une unité de sulfure de m-phénylène dans une unité de répétition, et présentant un degré de cristallisation de 10,0 % ou plus et de 30,0 % ou moins tel que mesuré par le procédé de la description, un diamètre de fibre moyen de 5 μm ou plus et de 25 μm ou moins, et en outre un taux de retrait dans de l'eau chaude à 98°C de 25,0 % ou moins tel que mesuré par le procédé de la description.

**2.** Fibre de sulfure de polyphénylène copolymérisé selon la revendication 1, présentant une biréfringence de 0,18 ou plus et de 0,40 ou moins telle que mesurée par le procédé de la description.

**3.** Fibre de sulfure de polyphénylène copolymérisé selon la revendication 1 ou 2, présentant un point de fusion de 200°C ou plus et de 260°C ou moins tel que mesuré par le procédé de la description.

**4.** Fibre de sulfure de polyphénylène copolymérisé selon l'une quelconque des revendications 1 à 3, présentant une valeur CV d'un diamètre de fibre de 10,0 % ou moins telle que mesurée par le procédé de la description.

**5.** Fibre de sulfure de polyphénylène copolymérisé selon l'une quelconque des revendications 1 à 4, présentant une résistance de 2,0 cN/dtex ou plus et un allongement de 50 % ou moins tels que mesurés par le procédé de la description.

**6.** Fibre de sulfure de polyphénylène copolymérisé selon l'une quelconque des revendications 1 à 5, dans laquelle l'unité de sulfure de m-phénylène dans une unité de répétition est contenue à 5 % en mole ou plus ou à 30 % en mole ou moins.

**7.** Fibre de sulfure de polyphénylène copolymérisé selon l'une quelconque des revendications 1 à 6, dans laquelle le degré de cristallisation est de 28 % ou moins ou est de 15 % ou plus.

**8.** Fibre de sulfure de polyphénylène copolymérisé selon l'une quelconque des revendications 1 à 7, dans laquelle le taux de retrait est de 20,0 % ou moins.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 7189169 A
- JP 2010077544 A
- JP 2007039840 A
- EP 2511409 A1
- EP 2065500 A1
- JP 2009068149 A